# EUROPÄISCHE PATENTSCHRIFT

(11) **EP 0 712 482 B1**
(45) Veröffentlichungstag und Bekanntmachung des Hinweises auf die Patenterteilung: **17.09.1997**
(21) Anmeldenummer: 94924297.8
(22) Anmeldetag: 29.07.1994
(51) Int. Cl.: F26B 19/00, F26B 17/20, A01D 43/00

(54) **VERFAHREN UND VORRICHTUNG ZUM AUFNEHMEN, TROCKNEN UND PRESSEN VON BIOMASSE**
PROCESS AND DEVICE FOR COLLECTING, DRYING AND PRESSING BIOMASS
PROCEDE ET DISPOSITIF POUR LE RAMASSAGE, LE SECHAGE ET LA COMPRESSION DE BIOMASSE

(30) Priorität: 10.08.1993 DE 4326849
(43) Veröffentlichungstag der Anmeldung: 22.05.1996
(73) Patentinhaber: Haimer, Franz, D-86568 Hollenbach (DE)
(72) Erfinder: Haimer, Franz, D-86568 Hollenbach (DE)
(74) Vertreter: Ernicke, Hans-Dieter, Dipl.-Ing.
(86) Internationale Anmeldenummer: EP9402501
(87) Internationale Veröffentlichungsnummer: WO9504909

(56) Entgegenhaltungen:
- EP-A- 0 507 390
- WO-A-91/01080
- BE-A- 382 572
- DE-A- 1 632 887
- DE-A- 3 228 730
- DE-C- 353 714
- DE-C- 353 715
- FR-A- 940 248
- FR-A- 2 236 427
- GB-A- 647 502
- GB-A- 784 861
- US-A- 2 259 210

## Beschreibung

Die Erfindung bezieht sich auf Verfahren zum Aufnehmen, Trocknen und Pressen von Biomasse, z.B. Halmgut, sowie auf Vorrichtungen zur Durchführung dieser Verfahren.

Durch die DE-A-1 632 887 ist eine fahrbare Trockenanlage zum Trocknen von Erntegut bekannt geworden, bei der das aufgenommene Halmgut unzerkleinert mittels eines Höhenförderers einer Trocknungsanlage zugeführt wird. Diese besteht aus einer Vielzahl quer zur Fahrtrichtung sich erstreckenden Schleuderwalzen, unter denen sich jeweils eine wannenförmige Wand befindet. Außerdem wird mittels eines Gebläses durch Flammen erwärmte Luft in die Trocknungsanlage geblasen. Das Halmgut wird durch die Schleuderwalzen hochgeschleudert und soll dadurch sowie durch die Luftströmung der jeweils benachbarten Schleuderwalze übergeben werden. Die Schleuderwalzen sind in drei Etagen übereinander angeordnet. Von der letzten Schleuderwalze der untersten Etage gelangt dann das getrocknete Erntegut zu einer Kolbenpresse, wo das Erntegut zu einem quer sich erstreckenden Strang endlicher Länge verdichtet wird. Mittels Kreismessern wird dann der Strang in Scheiben geschnitten, die beim Einfallen in einen Höhenförderkanal selbsttätig abbröckeln sollen. Offenbar soll auf diese Weise verdichtetes Futtermittel in Waffelform erzeugt werden.

Eine solche Erntemaschine verbraucht erhebliche Energie durch die Flammenerwärmung der Luft und den Antrieb der Schleuderwalzen. Wegen der Verbrennung von Kraftstoff und der durch hohe Drehzahlen der Schleuderwalzen bedingten Geräusche erweist sich die vorbekannte Anlage als Umweltbelastung. Die erzeugbaren Waffeln sind nicht als Brennstoff geeignet.

Durch die DE-A-3 228 730 ist eine andere Vorrichtung zum Trocknen und Bergen von mähfrischem Gras bekannt, bei der das Gras während der Fahrt vom Mähbalken abgesaugt, einem gezogenen Trockner mit warmluftbeheizten Förderschnecken zugeführt, getrocknet und anschließend gekühlt sowie einem nachfahrenden Sammelwagen oder einer Ballenpresse übergeben wird.

Auch diese Vorrichtung verbraucht erhebliche Energie zum Trocknen und Abkühlen des gemähten Grases.

Drei Förderschnecken sind in einem schmalen Schacht übereinander angeordnet und jeweils gegenläufig angetrieben. Dadurch soll das von der obersten Förderschnecke stirnseitig aufgenommene Gras längs ihrer Achse bis ans andere Ende gefördert und dort auf die darunter befindliche Förderschnecke übergeben werden.

Eine solche Anordnung weist wegen der geringen Anzahl von Förderschnecken einen sehr kleinen Wirkungsgrad auf. Außerdem muß das Fahrzeug sehr langsam bewegt werden, damit in der obersten Förderwalze kein Stau entstehen kann.

Der Erfindung liegt demgegenüber die Aufgabe zugrunde, die Aufnahme, Trocknung und Verdichtung des Erntegutes in einer anderen Weise vorzunehmen, die energiesparend, geräuscharm und umweltverträglich ist, wobei das verdichtete Erntegut nicht nur als Futtermittel, sondern auch als Brennstoff verwendbar sein soll.

Ausgehend von der DE-A-3 228 730 ergibt sich die erfindungsgemäße Lösung der gestellten Aufgabe aus den Merkmalen des Patentanspruches 1.

Im Unterschied zum erwähnten Stand der Technik wird das Erntegut im zerkleinerten Zustand der Trocknungsvorrichtung zugeführt, wo das Erntegut längs der Förderwalzen in einer breiten, aber verhältnismäßig dünnen Schicht mäanderförmig durch die Förderwalzenetagen bewegt wird. Die erwärmte Trocknungsluft durchströmt diese Halmgutschicht quer, vorzugsweise von unten nach oben. Als Energiequelle werden die Abgase des Antriebsmotors der Erntemaschine und die erwärmte Umluft dieses Motors eingesetzt. Schließlich wird das auf energiesparende Weise getrocknete Erntegut einer Pelletierpresse zugeführt, die Gegenstand einer anderen, nicht vorveröffentlichten Erfindung gemäß DE-P-42 14 111.7 ist. Durch dieses Pelletieren ist das Preßgut für die Verwendung als Brennstoff geeignet.

Weitere Vorteile ergeben sich aus den Unteransprüchen.

Wenn man die Biomasse auf ca. 80°C erwärmt, ergibt sich eine optimale Energiebilanz, weil die ohnedies beim Fahren der Erntemaschine entstehende Wärme ausreicht, die Biomasse auf diese Temperatur zu erwärmen. Andererseits läßt sich so warme Biomasse besonders gut pelletieren.

Es erweist sich als zweckmäßig, wenn die Förderrichtung der gebildeten Biomasse-Schicht beim Trocknen quer zur Fahrtrichtung der Erntemaschine und die Strömungsrichtung des Wärmemediums ungefähr vertikal vorgesehen werden. Dadurch wird der Vorteil erzielt, daß die gesamte Breite der Erntemaschine für die Trocknung der Biomasse ausgenützt wird, wobei zufolge der mäanderförmigen Schichtführung auch genügend Höhe der Erntemaschine ausgenutzt werden kann.

Als Fördermittel für die gebildete Schicht eignen sich alle Förderelemente, die porös bzw. luftdurchlässig sind und die Mitnahme des zerkleinerten Halmgutes gewährleisten.

Besonders gute Erfahrungen wurden mit der Erfindung gemacht, wenn die gebildete Schicht durch eine Vielzahl nebeneinander und etagenartig übereinander befindlicher Schneckenförderer voranbewegt wird. Das zerkleinerte Halmgut wird längs der einzelnen Schneckenwellen bis zu deren freien Stirnseite gefördert und fällt dann auf die darunter befindliche andere Etage weiterer Schneckenförderer, deren Förderrichtung natürlich entgegengesetzt zur Schneckenförderrichtung der vorhergehenden Etage ist.

In den Ansprüchen 5 bis 15 sind die für die Durchführung der erfindungsgemäßen Verfahren geeigneten Vorrichtungsmerkmale offenbart, die in der Beschreibung näher erläutert werden.

In der Zeichnung ist die Erfindung schematisch und beispielsweise dargestellt. Es zeigen:
- Fig. 1 und 2:: Seitenansicht und Draufsicht auf eine Erntemaschine in einem ersten Ausführungsbeispiel,
- Fig. 3:: einen Querschnitt durch eine etagenweise angeordnete Trocknungsvorrichtung für die zerkleinerte Biomasse nach der Linie III-III in Fig. 1,
- Fig. 4:: einen Teilquerschnitt durch die Trocknungsvorrichtung nach der Linie IV-IV in Fig. 3,
- Fig. 5:: einen Längsschnitt durch eine Zuführschnecke,
- Fig. 6:: Seitenansicht einer Erntemaschine als Alternative zu Fig. 1,
- Fig. 7:: einen Längsschnitt durch die Trocknungsvorrichtung nach Linie VII-VII in Fig. 6,
- Fig. 8:: eine Stirnansicht der Trocknungsvorrichtung von Fig. 7,
- Fig. 9:: eine Stirnansicht einer einen Kanal bildenden Lochwand,
- Fig. 10:: eine Draufsicht auf einen Teilbereich der Lochwand und
- Fig. 11:: einen Querschnitt durch die Lochwand längs der Linie XI-XI in Fig. 9.

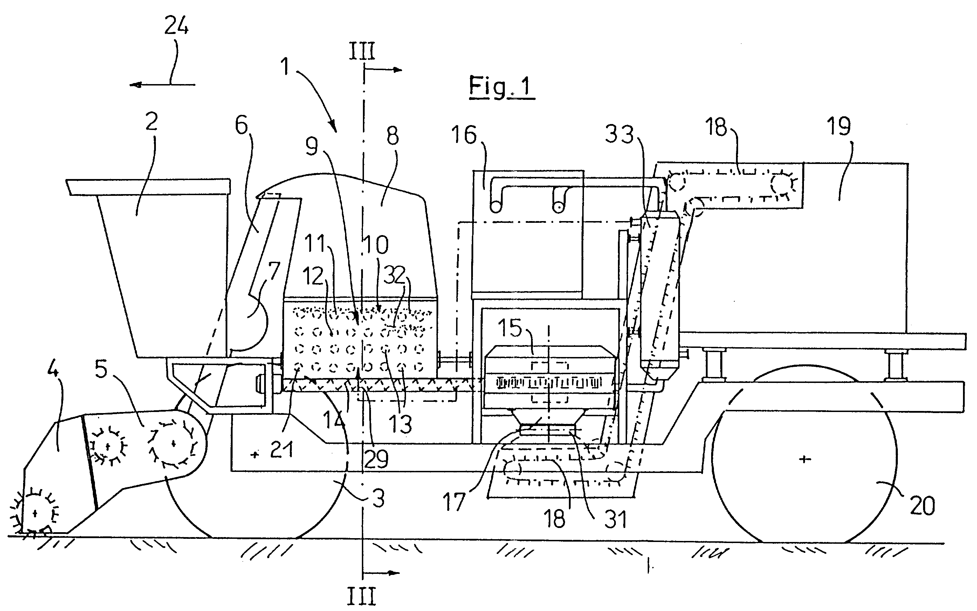

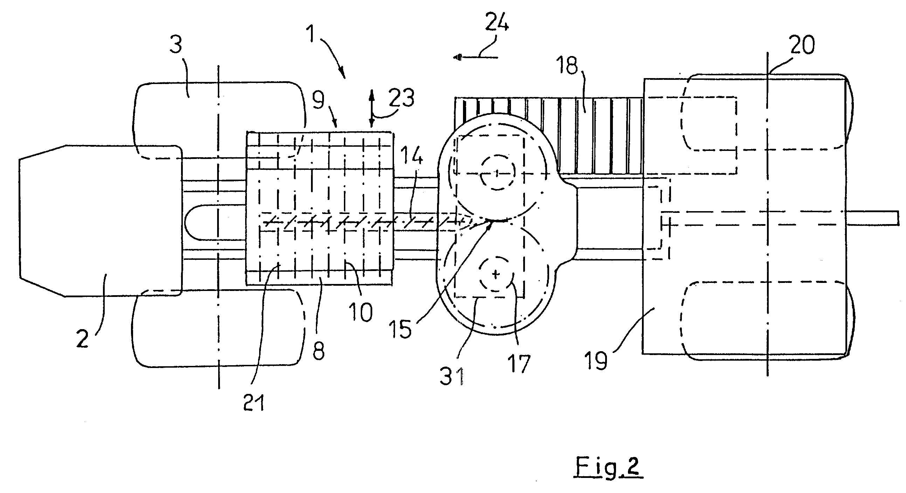

Die in Figur 1 und 2 in einer ersten Ausführungsvariante schematisch dargestellte Erntemaschine (1) weicht in ihrer Gestaltung ganz erheblich von einer herkömmlichen Erntemaschine, beispielweise einem Mähdräscher, ab. Die erfindungsgemäße Erntemaschine (1) soll in der Lage sein, Biomasse vom Feld aufzunehmen, zu zerkleinern und zu Pellets zu verdichten, wobei der Einfluß der Witterung dadurch eliminiert werden soll, daß das zerkleinerte Halmgut in intensiver Weise getrocknet wird, bevor es in die Pelletiervorrichtung gelangt. Erstrebt wird dabei nicht nur ein Feuchtigkeitsentzug, sondern eine effektive Erwärmung der Biomasse auf vorzugsweise 80°C, bevor sie pelletiert wird. Die Temperatur kann natürlich in weiten Bereichen schwanken und zwar in Abhängigkeit von der Biomassen-Sorte sowie den momentanen klimatischen Gegebenheiten. Fest steht nur, daß das Pelletieren optimal stattfindet, wenn erwärmte Biomasse zugeführt wird.

Die Erntemaschine (1) ist in Ihrer Größenordnung durch die Vorderachse (3) und die Hinterachse (20) sowie die Fahrerkabine (2) bestimmt. Im vorderen Bereich befindet sich eine übliche Pick-up-Einrichtung (4), die in der Lage sein muß, das auf dem Feld liegende bereits geschnittene Erntegut oder das noch am Halm stehende Erntegut zu schneiden und aufzunehmen. Solche Pick-up-Einrichtungen sind bei Mähdräschern und dergleichen Erntefahrzeugen bekannt, so daß deren Details nicht beschrieben zu werden brauchen.

Das aufgenommene Halmgut, das insbesondere Getreide, aber auch Heu sein kann, gelangt durch die Pick-up-Einrichtung (4) in den Bereich eines Häckslers (5), der das Halmgut zerkleinert und mit Hilfe des Gebläses (7) oder eines sonstigen Fördermittels durch den Schacht (6) in einen Bunker (8) für zerkleinertes Halmgut fördert. Dieser Bunker (8) ist Bestandteil einer Anordnung (9) zum Erwärmen der Biomasse.

Das Prinzip der erfindungsgemäßen Trocknung des zerkleinerten Halmgutes besteht darin, daß das in den Bunker (8) eingefüllte zerkleinerte Material in eine möglichst breite, aber dünne Schicht (32) verteilt wird und diese Schicht entlang einer Förderstrecke (10) mäanderförmig voranbewegt wird.

Man kann sich vorstellen, daß als Fördermittel ein mäanderförmig geführtes Förderband verwendet wird, das aber deswegen weniger von Vorteil ist, weil die Erfindung davon ausgeht, ein beheiztes gasförmiges Medium quer (29) durch die Schicht (32) strömen zu lassen.

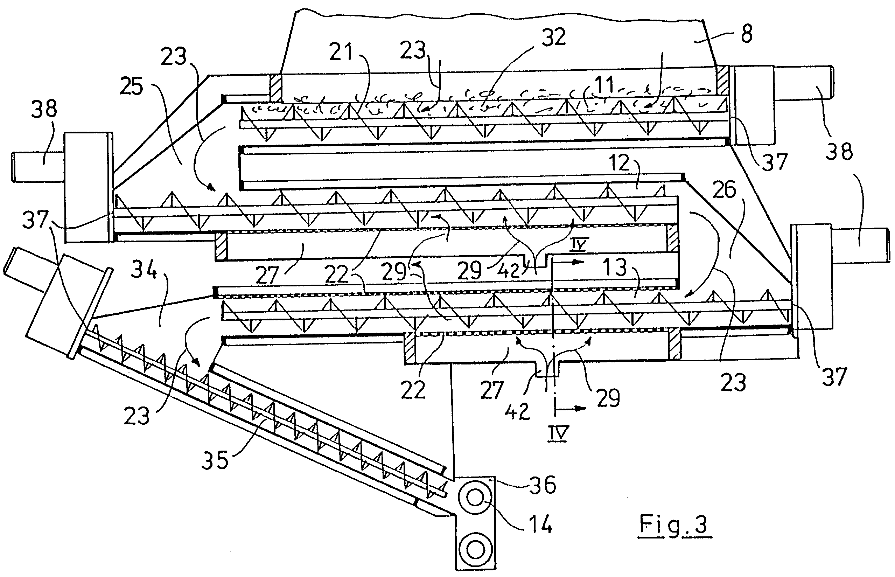

Um diese Schwierigkeiten zu beseitigen, wird im Ausführungsbeispiel der Figuren 1 bis 4 eine aus einer Vielzahl von Schneckenförderern (21) gebildete Förderstrecke (10) gezeigt, deren Schneckenförderer (21) in mehreren Etagen (11,12,13) übereinander und zueinander versetzt sind. Wie man am besten aus Figur 3 ersieht, gelangt die im Bunker (8) befindliche zerkleinerte Biomasse auf eine erste, den Bunker (8) unten abschließende Etage (11) von Schneckenförderern (21), welche das Halmgut aufnehmen und längs Ihrer Achsen voranbewegen. Man könnte im Bunker (8) eine (nicht dargestellte) Verteilerschnecke oder ein gleichwirkendes Organ anordnen, um das Halmgut möglichst gleichmäßig auf die zahlreichen Schneckenförderer (21) zu verteilen.

Am Ende der ersten Etage (11) fällt das vorangeförderte Halmgut durch den Übergabeschacht (25) auf den Endbereich einer darunter befindlichen zweiten Etage (12) von Schneckenförderern (21). Mit (23) ist die jeweilige Förderrichtung der einzelnen Schneckenförderer (21) dargestellt. Man sieht also, daß das Halmgut in der ersten Etage (11) von rechts nach links und in der zweiten Etage (12) von links nach rechts voranbewegt wird. Am Ende der zweiten Etage (12) befindet sich wiederum ein Übergabeschacht (26), welcher das erhaltene zerkleinerte Halmgut einer dritten Etage (13) übergibt. An deren Ende befindet sich ein Übergabeschacht (34), welcher das Halmgut an eine Abgabeschnecke (35) weiterleitet, die schräg nach unten geneigt angeordnet ist und etwa in der Mittellängsebene des Erntefahrzeuges (1) endet. Diese Zuführschnecke (14) fördert das aufgenommene Material in den Eingangszwickel einer Pelletiervorrichtung (15) (vgl. Fig. 1). Die Pelletiervorrichtung (15) kann so ausgebildet sein, wie sie in der älteren DE-Patentanmeldung P 42 14 111.7 beschrieben ist.

Die Erwärmung des durch die Schneckenförderer (21) bewegten Halmgutes erfolgt nun in der Weise, daß ein erwärmtes Gas, insbesondere Luft, durch die Schneckenförderer (21) und durch die darauf befindlichen Schichten (32) des Halmgutes gefördert wird und zwar in Richtung der Pfeile (29) in den Figuren 1 und 3.

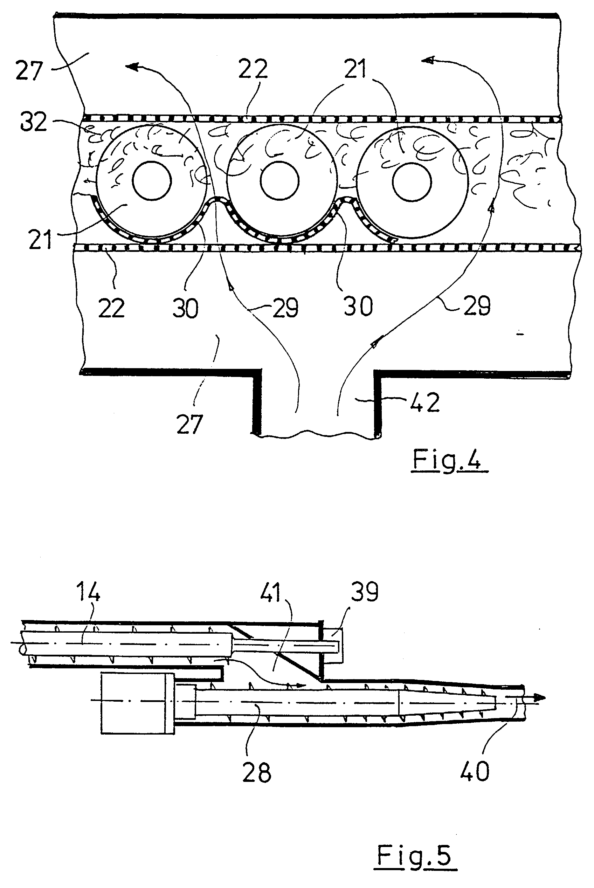

Zu diesem Zweck ist, wie Fig. 4 in Vergrößerung zeigt, unterhalb der Etagen (12,13) eine Lochwand (22) vorgesehen, durch welche das erwärmte Gasmedium von unten her strömen und dabei die einzelnen Schichten (32) durchsetzen kann. Das Heizmedium wird von dem Verbrennungsmotor (16) der Erntemaschine gewonnen, indem die Abgase des Verbrennungsmotors (16) in einen Gas/Luft-Wärmetauscher (33) geführt werden. Die in diesem Wärmetauscher erwärmte Luft wird mittels nicht dargestellter Ventilatoren oder dergleichen über die Anschlußstutzen in Heizräume (27) gebracht, die sich unterhalb der Etagen (12,13) der Schneckenförderer (21) befinden und welche durch die Lochwände (22) abgedeckt sind. Die im Wärmetauscher abgekühlten Abgase des Verbrennungsmotors (16) können ihrerseits in die Pelletiervorrichtung (15) geführt werden, um dort mit der noch vorhandenen Restwärme die Verdichtungswerkzeuge aufzuheizen.

Es ist außerdem vorgesehen, die erwärmte Umluft des Verbrennungsmotors (16) zum Beheizen der Pelletiervorrichtung (15) und eventuell deren Zuführorgane zu verwenden.

Aus der Darstellung der Figuren 1 und 3 erkennt man, daß der Raum zwischen Fahrerkabine (2) und Verbrennungsmotor (16) durch die Anordnung (9) zum Erwärmen der Biomasse ausgenutzt wird, wobei die gesamte Breite des Erntefahrzeuges (1) für die Länge der Schneckenförderer (21) zur Verfügung steht. Da diese Schneckenförderer (21) etagenweise (11 bis 13) übereinander angeordnet sind, wird auch ein genügend großer Raum in der Höhe ausgenutzt. Die Förderrichtung (23) der Halmgutschicht (32) erstreckt sich also quer zur Fahrtrichtung (24) der Erntemaschine, wohingegen die Gasströmungsrichtung (29) ungefähr vertikal von unten nach oben vorgesehen ist.

Wie Fig. 3 zeigt, ist der einzelne Schneckenförderer (21,35) bei diesem Beispiel nur einseitig gelagert (37) und angetrieben (38). An der gegenüberliegenden Seite muß dann der Schneckenförderer (21) stirnseitig frei sein, um das geförderte Halmgut an die nächste Etage der Schneckenförderer (21) abzugeben. Damit die Schneckenförderer (21) in ihrer Lage zentriert sind, befindet sich, wie Figur 4 zeigt, im unteren Zwickel zwischen zwei Schneckenförderern (21) jeweils ein ortsfester Keil (30), der beispielsweise auf der Oberseite der Siebplatte (22) angeordnet sein kann. Auch diese Keile (30) sind gelocht ausgestaltet, um die Heißluft von unten her durchströmen zu lassen.

Weil das geförderte und zerkleinerte Halmgut großflächig der Wärmeeinwirkung ausgesetzt wird, gelingt es, die Heizleistung der Aufnahmeleistung der Pick-up-Einrichtung (4) sowie der Preßleistung der Pelletiervorrichtung (15) anzupassen und das Halmgut auf eine optimale Pelletiertemperatur zu erwärmen.

Die Pellets gelangen aus der Pelletiervorrichtung (15) gemäß Fig. 1 und 2 durch axiale Austrittsöffnungen (17) auf einen Querförderer (31) und von diesem auf einen seitlich angeordneten Höhenförderer (18), der mit geeigneten Mitnehmerelementen versehen ist und die Pellets in einen Bunker (19) befördert, der beim Ausführungsbeispiel oberhalb der Hinterachse (20) angeordnet ist. Man erkennt, daß die das größte Eigengewicht besitzenden Apparate, nämlich der Verbrennungsmotor (16) und die Pelletiervorrichtung (15), günstig zwischen den beiden Achsen (3 und 20) angeordnet sind und damit das Gewicht gleichmäßig auf die Achsen der Erntemaschine (1) verteilt wird, die zweckmäßigerweise allradangetrieben und beide lenkfähig sind.

Während die Schneckenförderer (21 und 35) nebeneinander angeordnet sind und deshalb Schichten (32) des Halmgutes voranbewegen, muß die Zuführschnecke (14) das übernommene Material bündeln und beim Vorschub verdichten. Deshalb ist erklärlich, daß die Schneckenförderer (21 und 35) fliegend (37) gelagert werden können.

Anders verhält es sich bei der Zuführschnecke (14). Wenn die dort gebündelte Masse voranbewegt werden soll, würde die einseitige Lagerung möglicherweise überbelastet werden.

Deshalb ist in Fig. 5 gezeigt, die Zuführschnecke (14) ebenfalls etagenweise anzuordnen, wobei der erste Teil (14) der Zuführschnecke beidseitig gelagert (39) wird, wohingegen der zweite Teil (28) wiederum nur einseitig gelagert ist, weil er kürzer ausgebildet werden kann und direkt in den Eingang (40) der Pelletiervorrichtung mündet. Zwischen beiden Schneckenteilen (14,28) ist ein Übergabeschacht (42) vorgesehen.

Es erweist sich als zweckmäßig, zwei oder mehr Zuführschnecken (14,28) nebeneinander in einem gemeinsamen Kanal anzuordnen, um auf diese Weise die Zuführmenge des Erntegutes zur Pelletiervorrichtung zu erhöhen.

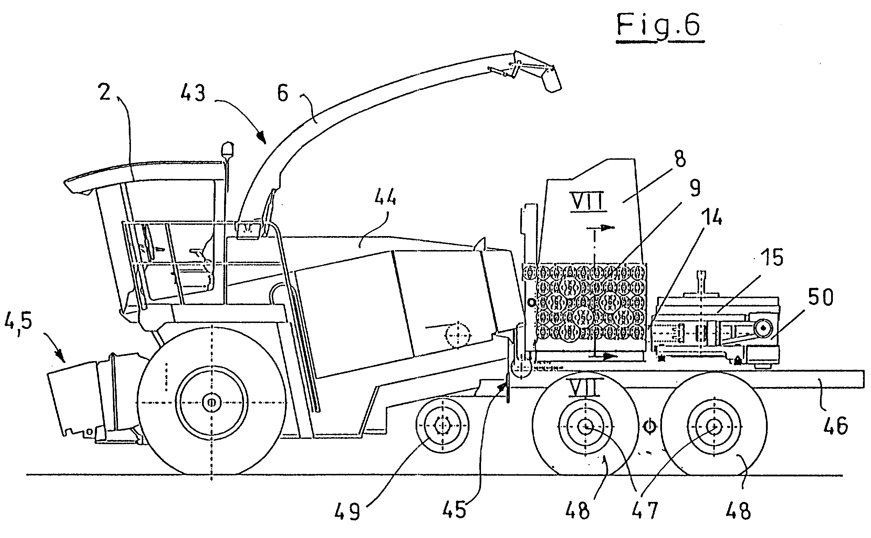

Im zweiten Ausführungsbeispiel der Fig. 6 ist eine anders gestaltete Erntemaschine (43) gezeigt, bei der ein handelsüblicher selbstfahrender Häcksler (44) bei (45) mit einem Fahrgestell (46) vorzugsweise starr gekoppelt ist. Das Fahrgestell (46) kann ein- oder mehrachsig (47) ausgerüstet sein und bevorzugt lenkbare Räder (48) aufweisen.

Beim Ankoppeln des Fahrgestelles (46) an den Häcksler (44) werden die kleinen Häckslerräder (49) vom Boden abgehoben.

Der Vorteil dieser Maßnahme liegt darin, daß das Fahrgestell (46) die Last der Anordnung (9) zum Erwärmen der Biomasse sowie der Pelletiervorrichtung (15) und deren Getriebes (50) besser verteilt aufnehmen kann. Koppelt man den Häcksler (44) vom Fahrgestell (46) ab, dann kann der Häcksler (44) für sich allein intensiver und daher wirtschaftlicher ausgenutzt werden.

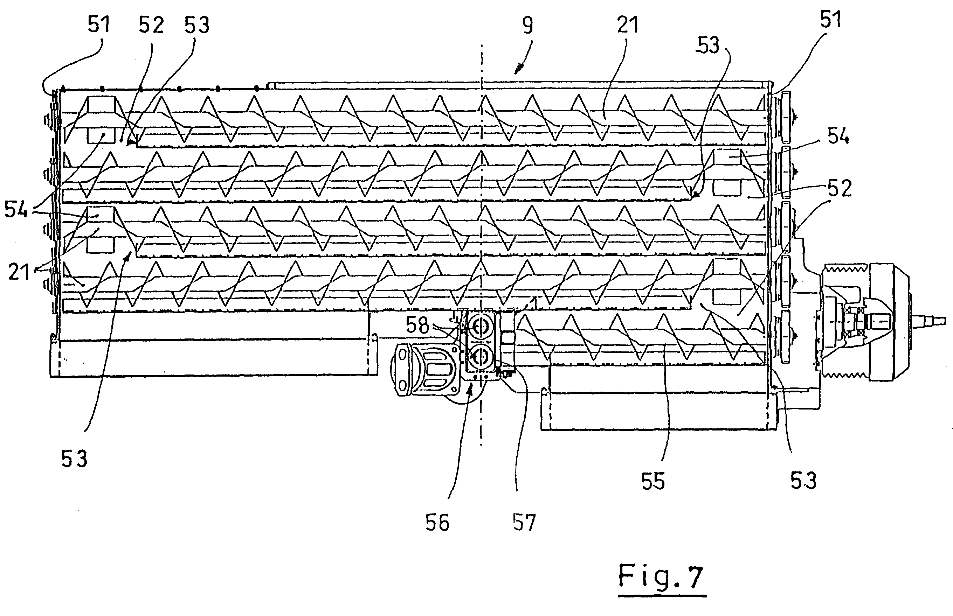

Bei der in Fig. 7 alternativ dargestellten Anordnung (9) zum Erwärmen der Biomasse sind die Förderwalzen (21) nicht - wie in Fig. 3 - zueinander versetzt, sondern in einem gemeinsamen Maschinengestell (51) beidseitig gelagert. Im Übergabebereich (52) weisen die Lochwände (22) Aussparungen (53) auf, und die Förderwalzen (21) sind in diesen Bereichen mit geeigneten Abwurfelementen (54) versehen, welche die Biomasse von der einen Etage (11,12) in die andere Etage (12,13) der Förderwalzen (21) befördern.

Am Ende der untersten Etage (55) der Förderwalzen ist eine Anordnung (56) zum Zuführen des getrockneten Erntegutes zur Pelletiervorrichtung vorgesehen, die in einem gemeinsamen Gehäuse (57) zwei parallele Zuführschnecken (58) aufweist. Dadurch kann die Zuführmenge des Erntegutes zur Pelletiervorrichtung gesteigert und eine optimale Leistung der Pelletiervorrichtung erreicht werden.

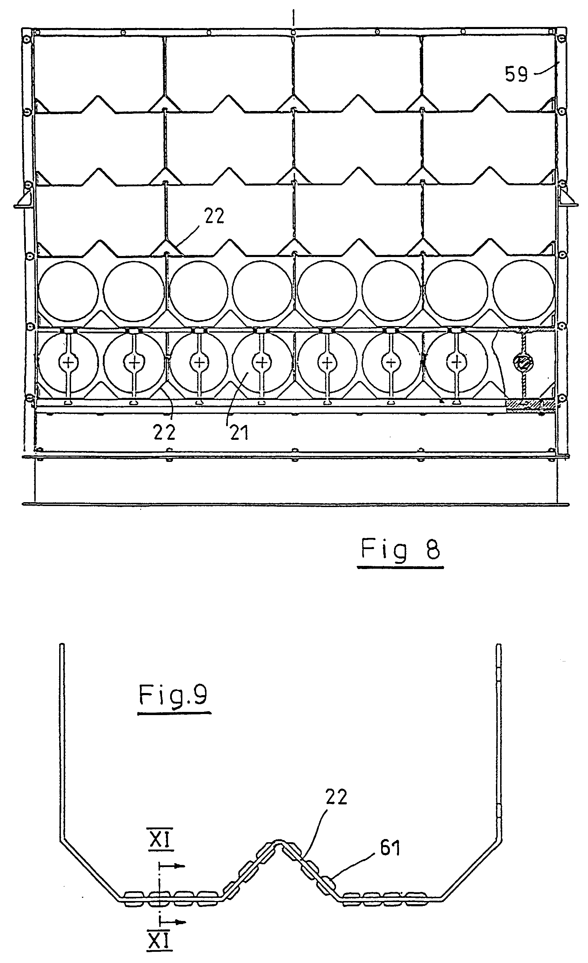

Die Figur 8 zeigt einen Längsschnitt durch die Anordnung (9) zur Erwärmung der Biomasse, woraus erkennbar ist, daß die Förderwalzen (21) in einer Stellage (59) von Lochwänden (22) angeordnet sind, die - wie Fig. 9 zeigt-trapezförmig dem Umfang der einzelnen Förderwalze (21) angepaßt sind.

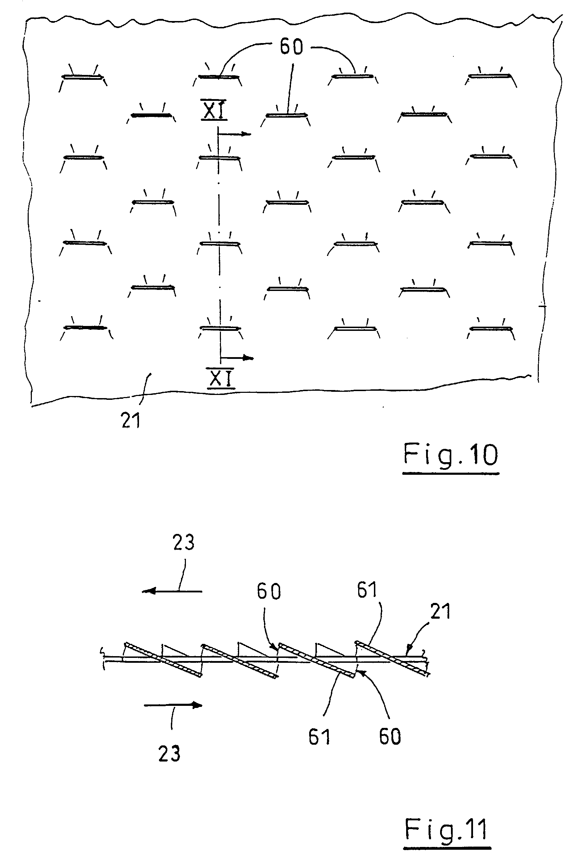

Die Lochwände (22) sind bei diesem Ausführungsbeispiel in besonderer Weise gestaltet, wie dies aus den Figuren 10 und 11 hervorgeht. Danach weist die Lochwand (22) eine Vielzahl von linearen Einstichen (60) auf, die reihenmäßig vorgesehen und deren Reihen zueinander versetzt sind.

Jedem Einstich (60) ist eine Schulter (61) vorgeordnet, die durch Verformung der Lochwand (22) so gestaltet ist, daß die Schulter (61) in Förderrichtung der Biomasse an der Oberfläche der Lochwand (22) vor dem Einstich erhaben und hinter dem Einstich (60) an der Unterfläche der Lochwand (22) erniedrigt erhaben ist.

Auf diese Weise wird eine strömungsgünstige Gestaltung der Lochwand (22) erreicht. In Förder- bzw. Strömungsrichtung (23) ist die einzelne Schulter (61) ansteigend. Da die Förderrichtungen (23) an Ober- und Unterseite der Lochwand (22) entgegengesetzt gerichtet sind, ergibt sich durch die besondere Profilierung der Schultern (61) an beiden Seiten der Lochwand (22) eine strömungsgünstige Struktur.

Diese Lochwand (22) läßt sich mit Vorteil überall dort anwenden, wo Löcher, Schlitze oder dgl. Unterbrechungen strömungsgünstig angeordnet werden sollen.

Im übrigen ergibt sich durch die besondere Profilierung der Schultern (61) eine gezielte Strömung der die Lochwände (22) durchsetzenden Warmluft in Richtung der Förderbewegung des Erntegutes.

Wenn man die einzelne Lochwand (22) verformt, beispielsweise in die trapezartige Form gemäß Fig. 9 abknickt, kann man sie dem Umfang der einzelnen Förderwalze (21) anpassen und damit einen fördergünstigen Kanal für die Bewegung des Erntegutes längs der Förderwalze (21) schaffen, wie dies auch in Fig. 8 dargestellt ist.

### STÜCKLISTE

- 1: Erntemaschine
- 2: Fahrerkabine
- 3: Vorderachse
- 4: Pick-up
- 5: Häcksler
- 6: Förderschacht
- 7: Gebläse
- 8: Bunker für zerkleinertes Halmgut
- 9: Anordnung zum Erwärmen der Biomasse
- 10: Förderstrecke
- 11: 1. Etage Schneckenförderergruppe)
- 12: 2. Etage (Schneckenförderergruppe)
- 13: 3. Etage (Schneckenförderergruppe)
- 14: Zuführschnecke
- 15: Pelletiervorrichtung
- 16: Verbrennungsmotor
- 17: Austrittsöffnung
- 18: Höhenförderer
- 19: Bunker für Pellets
- 20: Hinterachse
- 21: Schneckenförderer (Förderwalze)
- 22: Lochwand
- 23: Förderrichtung
- 24: Fahrtrichtung
- 25: Übergabeschacht
- 26: Übergabeschacht
- 27: Heizraum
- 28: Zuführschnecke
- 29: Gasströmungsrichtung
- 30: ortsfester Keil
- 31: Querförderer
- 32: Schicht
- 33: Gas/Luft-Wärmetauscher
- 34: Übergabeschacht
- 35: Abgabeschnecke
- 36: Schneckengehäuse
- 37: fliegende Lagerung
- 38: Antrieb
- 39: Lagerung
- 40: Eingang der Pelletiervorrichtung
- 41: Übergabeschacht
- 42: Anschlußstutzen
- 43: Erntemaschine
- 44: Häcksler
- 45: Kopplung
- 46: Fahrgestell
- 47: Achse
- 48: Rad
- 49: Häckslerrad
- 50: Getriebe
- 51: Maschinengestell
- 52: Übergabebereich
- 53: Aussparung
- 54: Abwurfelement
- 55: unterste Etage der Förderwalzen
- 56: Anordnung zum Zuführen des getrockneten Erntegutes
- 57: Gehäuse
- 58: Zuführschnecke
- 59: Stellage
- 60: Einstich
- 61: Schulter

## Patentansprüche

1. Verfahren zum Aufnehmen, Trocknen und Pressen von Biomasse, z.B. Halmgut, mittels einer Erntemaschine (1), bei der das aufgenommene und in die Höhe geförderte Erntegut einem aus mehreren etagenweise übereinander angeordneten Förderwalzen (21) bestehenden Trockner (9) unter Einwirkung gasförmigen Wärmemediums übergeben und von dort einer Preßvorrichtung (15) zum Pressen des Preßgutes zugeführt wird, wobei das Erntegut auf die in der oberen Etage (11) befindliche Förderwalze (21) aufgebracht sowie längs der Achsen der Förderwalze (21) voranbewegt und am Ende der Förderwalze (21) auf die jeweils nächsttiefere Förderwalzen-Etage (12,13) umgelenkt wird, wobei das gasförmige Wärmemedium quer durch die einzelnen Etagen (11,12,13) geführt wird, dadurch **gekennzeichnet,** daß jede Förderwalzen-Etage (11,12,13) mehrere Förderwalzen (21) nebeneinander aufweist, das Erntegut in zerkleinertem Zustand in breiter Schicht auf alle in der oberen Etage (11) befindlichen Förderwalzen (21) aufgebracht wird und die Preßvorrichtung (15) das Erntegut zerkleinert und pelletiert.

2. Verfahren nach Anspruch 1, dadurch **gekennzeichnet,** daß die Biomasse auf eine Temperatur in der Größenordnung von ca. 80°C für das Pelletieren erwärmt wird.

3. Verfahren nach Anspruch 1 oder 2, dadurch **gekennzeichnet,** daß die Abgase des Verbrennungsmotors (16) der Erntemaschine (1) in einen Gas/Luft-Wärmetauscher (33) geführt werden, von dem die erwärmte Luft zum Beheizen der geförderten Biomasse und die abgekühlte Abgase zum Beheizen der Pelletiervorrichtung (15) verwendet werden.

4. Verfahren nach einem der Ansprüche 1 bis 3, dadurch **gekennzeichnet,** daß die vom Verbrennungsmotor (16) der Erntemaschine (1) erwärmte Umluft zum Beheizen der Pelletiervorrichtung verwendet wird.

5. Vorrichtung zur Durchführung des Verfahrens nach Anspruch 1 oder folgenden mit einer selbstfahrenden Erntemaschine, bestehend aus einem Aufnehmer (4) und Höhenförderer (6) für das Erntegut, einer aus mehreren Förderwalzen (21) etagenweise angeordneten Trocknungsvorrichtung (9), einer Zuführung gasförmigen Wärmemediums und einer Preßvorrichtung (15) zum Pressen des Erntegutes, wobei die Förderwalzen (21) als Schneckenförderer zur Bewegung des Erntegutes längs ihrer Achsen ausgebildet sind und etagenweise wechselnde Förderrichtungen (23) aufweisen, am stirnseitigen Ende der zu einer Etage (11,12,13) gehörenden Förderwalze (21) eine Übergabeanordnung (25,2 6, 52) für das Fördern des Erntegutes auf die nächsttiefere Förderwalzen-Etage sich befindet und eine Anordnung zur Erzeugung einer quer zur Förderebene gerichteten Strömung des gasförmigen Wärmemediums vorgesehen ist, dadurch **gekennzeichnet,** daß die Vorrichtung einen Häcksler (5) aufweist, jede Förderwalzen-Etage (11,12,13) mehrere nebeneinander angeordnete Förderwalzen (21) enthält und die Preßvorrichtung (15) zum Zerkleinern des Preßgutes geeignet ist.

6. Vorrichtung nach Anspruch 5, dadurch **gekennzeichnet,** daß die Übergabeanordnung (25,26) durch Versatz der Förderwalzenetagen (11,12,13) oder durch Aussparungen (53) in den die einzelnen Etagen (11,12,13) der Förderwalzen (21) voneinander trennenden Böden (22) in Verbindung mit entsprechenden Abwurfelementen (54) an den Förderwalzen (21) gebildet ist.

7. Vorrichtung nach Anspruch 5 oder 6, dadurch **gekennzeichnet,** daß die Förderwalzen (21) sich quer zur Fahrtrichtung der Erntemaschine (1) erstrecken.

8. Vorrichtung nach Anspruch 5 oder einem der folgenden, dadurch **gekennzeichnet,** daß sich der Häcksler (5) im Anschluß an den Aufnehmer (4) befindet und der Höhenförderer (6) in einen Bunker (8) mündet.

9. Vorrichtung nach Anspruch 5 oder einem der folgenden, dadurch **gekennzeichnet,** daß das ablaufseitige Ende der untersten Förderwalzenetage (13) in eine etwa längs der Fahrzeugachse sich erstreckende Zuführschnecke (14) für die Preßvorrichtung (15) mündet.

10. Vorrichtung nach Anspruch 5 oder einem der folgenden, dadurch **gekennzeichnet,** daß die Förderwalzen (21) zwischen Lochwänden (22) angeordnet sind, durch deren Löcher das Heizmedium strömt.

11. Vorrichtung nach Anspruch 10, dadurch **gekennzeichnet,** daß die Lochwände (22) an den Umfang der Förderwalzen (21) angepaßt, insbesondere trapezförmig gestaltet sind.

12. Vorrichtung nach Anspruch 10 oder 11, dadurch **gekennzeichnet,** daß die einzelne Lochwand (22) eine Vielzahl von quer zur Förderrichtung (23) sich erstreckenden schlitzartigen Einstichen (60) aufweist, denen entgegengesetzt zur Förderrichtung (23) sanft abfallende Schultern (61) vorgeordnet sind.

13. Vorrichtung nach Anspruch 12, dadurch **gekennzeichnet,** daß die zwischen zwei in Förderrichtung (23) hintereinander angeordneten Einstichen (60) befindlichen Schultern (61) am vorauslaufenden Einstich (60) über die Oberfläche der Lochwand (22) erhaben und am zurückliegenden Einstich (60) über die Unterfläche der Lochwand (22) entgegengesetzt erhaben ausgebildet sind.

14. Vorrichtung nach Anspruch 12 oder 13, dadurch **gekennzeichnet,** daß die Einstiche in quer zur Förderrichtung (23) sich erstreckenden Reihen mit Abstand zueinander angeordnet und die Reihen untereinander so versetzt sind, daß der einzelne Einstich (60) der einen Reihe etwa mittig hinter der Lücke zwischen den Einstichen (60) der benachbarten Reihe liegt.

15. Vorrichtung nach Anspruch 5 oder einem der folgenden, dadurch **gekennzeichnet,** daß das Erntefahrzeug (1) aus einem selbstfahrenden Häcksler (5) und aus einem vornehmlich starr ankoppelbaren Fahrgestell (46) mit lenkbaren Rädern (48) besteht, welcher die Trocknungsvorrichtung (9) und die Preßvorrichtung (15) mit ihrem Antrieb (50) trägt.

## Claims

1. Method for picking up, drying and pressing biomass, for example stalk crops, by means of a harvesting machine (1), in which harvesting machine the harvested crops, which are picked up and conveyed upwards, are transferred to a drier (9), under the effect of a gaseous heating medium, comprising a plurality of conveying rollers (21) arranged in tiers one above the other, and from there are fed to a pressing device (15) for pressing the material to be pressed, the harvested crops being brought onto the conveying roller (21) situated in the upper tier (11), moved forwards along the axes [sic] of the conveying roller (21) and at the end of the conveying roller (21) deflected onto the next-lower conveying-roller tier (12,13) respectively, the gaseous heating medium being guided transversely through the individual tiers (11,12,13), characterised in that each conveying-roller tier (11,12,13) has a plurality of conveying rollers (21) one beside the other, the harvested crops are brought, in comminuted state, in a broad layer onto all the conveying rollers (21) situated in the upper tier (11) and the pressing device (15) comminutes and pelletises the harvested crops.

2. Method according to Claim 1, characterised in that the biomass is heated to a temperature in the order of magnitude of approximately 80°C for the pelletising.

3. Method according to Claim 1 or 2, characterised in that the exhaust gases of the internal combustion engine (16) of the harvesting machine (1) are guided into a gas/air heat exchanger (33), the heated air from which is used to heat the conveyed biomass and the cooled waste gases from which are used to heat the pelletising device (15).

4. Method according to one of Claims 1 to 3, characterised in that the surrounding air heated by the internal combustion engine (16) of the harvesting machine (1) is used to heat the pelletising device.

5. Apparatus for carrying out the method according to Claim 1 or the subsequent claims using a self-propelled harvesting machine, comprising a pick-up device (4) and elevating conveyor (6) for the harvested crops, a drying device (9) comprising a plurality of conveying rollers (21) arranged in tiers, a supply of gaseous heating medium and a pressing device (15) for pressing the harvested crops, the conveying rollers (21) being designed as screw conveyors for moving the harvested crops along their axes and having conveying directions (23) which alternate from tier to tier, a transfer arrangement (25,26,52) for conveying the harvested crops to the next-lower conveying-roller tier being situated at the end-face end of the conveying roller (21) belonging to a tier (11,12,13) and an arrangement for producing a flow, directed transversely to the conveying plane, of the gaseous heating medium being provided, characterised in that the apparatus has a chopper (5), each conveying-roller tier (11,12,13) contains a plurality of conveying rollers (21) arranged one beside the other and the pressing device (15) is suitable for comminuting the material to be pressed.

6. Apparatus according to Claim 5, characterised in that the transfer arrangement (25,26) is formed by offsetting the conveying-roller tiers (11,12,13) or by cutouts (53) in the floors (22) separating the individual tiers (11,12,13) of the conveying rollers (21) from one another, in conjunction with corresponding throwing-off elements (54) on the conveying rollers (21).

7. Apparatus according to Claim 5 or 6, characterised in that the conveying rollers (21) extend transversely to the direction of travel of the harvesting machine (1).

8. Apparatus according to Claim 5 or one of the subsequent claims, characterised in that the chopper (5) is situated after the pick-up device (4) and the elevating conveyor (6) opens into a bin (8).

9. Apparatus according to Claim 5 or one of the subsequent claims, characterised in that the discharge-side end of the lowermost conveying-roller tier (13) opens into a feed screw (14), extending approximately along the vehicle axis, for the pressing device (15).

10. Apparatus according to Claim 5 or one of the subsequent claims, characterised in that the conveying rollers (21) are arranged between perforated walls (22), through the holes of which the heating medium flows.

11. Apparatus according to Claim 10, characterised in that the perforated walls (22) are adapted to the periphery of the conveying rollers (21), in particular are trapezoidally shaped.

12. Apparatus according to Claim 10 or 11, characterised in that the individual perforated wall (22) has a multiplicity of slit-like incisions (60) which extend transversely to the conveying direction (23) and in front of which there are arranged shoulders (61) which slope gently downwards, opposite the conveying direction (23).

13. Apparatus according to Claim 12, characterised in that the shoulders (61) situated between two incisions (60) arranged one behind the other in the conveying direction (23) are constructed, at the incision (60) which is in front, raised above the upper surface of the perforated wall (22) and, at the incision (60) which is behind, raised oppositely above the lower surface of the perforated wall (22).

14. Apparatus according to Claim 12 or 13, characterised in that the incisions are arranged in rows extending transversely to the conveying direction (23) and spaced apart from one another and the rows are mutually offset in such a way that the individual incision (60) of one row lies approximately in the middle behind the gap between the incisions (60) of the adjacent row.

15. Apparatus according to Claim 5 or one of the subsequent claims, characterised in that the harvesting vehicle (1) comprises a self-propelled chopper (5) and a chassis (46), which can be coupled, in particular rigidly, has steerable wheels (48) and carries the drying device (9) and the pressing device (15) with its drive (50).

## Revendications

1. Procédé de ramassage, de séchage et de pressage de biomasse, par exemple de chaume, au moyen d'une moissonneuse (1) dans laquelle la matière récoltée ramassée et transportée vers le haut est transmise sous l'effet d'un fluide caloporteur gazeux à un dispositif de séchage (9), qui est constitué de plusieurs rouleaux transporteurs (21) superposés en étages, à partir duquel elle est amenée à un dispositif de pressage (15) destiné à comprimer la matière à presser, la matière récoltée étant chargée sur les rouleaux transporteurs (21) se trouvant à l'étage supérieur (11), ainsi que transportée le long des axes des rouleaux transporteurs (21), et étant déviée à la fin des rouleaux transporteurs (21) vers l'étage (12, 13) de rouleaux transporteurs situé juste au-dessous, le fluide caloporteur gazeux passant transversalement à travers les étages (11, 12, 13), caractérisé par le fait que chaque étage (11, 12, 13) de rouleaux transporteurs comporte plusieurs rouleaux transporteurs (21) disposés les uns à côté des autres, que la matière récoltée est chargée à l'état fragmenté en large couche sur tous les rouleaux transporteurs (21) se trouvant dans l'étage supérieur (11) , et que le dispositif de pressage (15) fragmente et boulète la matière récoltée.

2. Procédé selon la revendication 1, caractérisé par le fait que la biomasse est portée à une température de l'ordre de 80°C pour le bouletage.

3. Procédé selon la revendication 1 ou 2, caractérisé par le fait que les gaz d'échappement du moteur (16) à combustion interne de la moissonneuse (1) passent dans un échangeur de chaleur (33) gaz/air, dont l'air réchauffé est utilisé pour chauffer la biomasse transportée, et que les gaz d'échappement refroidis sont utilisés pour le chauffage du dispositif de bouletage (15).

4. Procédé selon l'une des revendications 1 à 3, caractérisé par le fait que l'air traversant chaud du moteur à combustion interne de la moissonneuse (1) est utilisé pour le chauffage du dispositif de bouletage.

5. Dispositif destiné à la mise en oeuvre du procédé selon la revendication 1 ou les suivantes, comportant une moissonneuse automotrice constituée d'un dispositif ramasseur (4) et d'un élévateur (6) pour la matière récoltée, d'un dispositif de séchage (9) constitué de plusieurs rouleaux transporteurs (21) disposés en étages, d'une amenée de fluide caloporteur gazeux et d'un dispositif de pressage (15) destiné à presser la matière récoltée, les rouleaux transporteurs (21) étant agencés sous la forme de transporteurs à vis sans fin pour déplacer la matière récoltée le long de leurs axes et ayant des sens de transport (23) alternés par étage, un dispositif de transfert (25, 26, 52) étant disposé à l'extrémité frontale des rouleaux transporteurs (21) faisant partie d'un étage (11, 12, 13) afin d'acheminer la matière récoltée vers l'étage de rouleaux transporteurs situé juste au-dessous, et un dispositif étant prévu pour engendrer un passage du fluide caloporteur gazeux transversalement au plan de transport, caractérisé par le fait que le dispositif comporte une hacheuse (5), que chaque étage (11, 12, 13) de rouleaux transporteurs comporte plusieurs rouleaux transporteurs (21) disposés les uns à côté des autres, et que le dispositif de pressage (15) est apte à fragmenter la matière à presser.

6. Dispositif selon la revendications 5, caractérisé par le fait que le dispositif de transfert (25, 26) est formé par le décalage des étages (11, 12, 13) de rouleaux transporteurs, ou par des évidements (53) pratiqués dans les fonds (22) séparant les étages (11, 12, 13) des rouleaux transporteurs (21) les uns des autres en liaison avec des éléments d'éjection (54) appropriés prévus sur les rouleaux transporteurs (21).

7. Dispositif selon la revendications 5 ou 6, caractérisé par le fait que les rouleaux transporteurs (21) s'étendent transversalement au sens de marche de la moissonneuse (1).

8. Dispositif selon la revendications 5 ou l'une des suivantes, caractérisé par le fait que la hacheuse (5) est située derrière le dispositif ramasseur (4), et que l'élévateur (6) débouche dans un silo (8).

9. Dispositif selon la revendications 5 ou l'une des suivantes, caractérisé par le fait que l'extrémité de sortie de l'étage inférieur (13) de rouleaux transporteurs débouche dans une vis d'amenée (14) du dispositif de pressage (15), qui s'étend sensiblement le long de l'axe du véhicule.

10. Dispositif selon la revendications 5 ou l'une des suivantes, caractérisé par le fait que les rouleaux transporteurs (21) sont disposés entre des parois perforées (22), par les trous desquelles passe le fluide de chauffage.

11. Dispositif selon la revendications 10, caractérisé par le fait que les parois perforées (22) sont adaptées à la circonférence des rouleaux transporteurs (21), et ont notamment une forme trapézoïdale.

12. Dispositif selon la revendications 10 ou 11, caractérisé par le fait que chaque paroi perforée (22) comporte de nombreuses entailles (60) du type fente qui s'étendent dans le sens du transport (23) et en amont desquelles sont prévus des épaulements (61) légèrement retombants dans le sens opposé au sens de transport (23).

13. Dispositif selon la revendications 12, caractérisé par le fait que les épaulements (61) situés entre deux entailles (60) disposées l'une derrière l'autre dans le sens de transport (23) sont agencés de telle sorte qu'ils font saillie de la face supérieure de la paroi perforée (22) au niveau de l'entaille (60) précédente, et qu'au niveau de l'entaille (60) suivante, ils font saillie dans le sens opposé de la face inférieure de la paroi perforée (22).

14. Dispositif selon la revendications 12 ou 13, caractérisé par le fait que les entailles sont disposées à une certaine distance les unes des autres en des rangées qui s'étendent transversalement à la direction de transport (23), et que les rangées sont décalées les unes par rapport aux autres de telle sorte que chaque entaille (60) de l'une des rangées soit située de façon approximativement centrée derrière l'intervalle existant entre les entailles (60) de la rangée voisine.

15. Dispositif selon la revendication 5 ou l'une des suivantes, caractérisé par le fait que le véhicule de récolte (1) est constitué d'une hacheuse (5) automotrice et d'un châssis (46) à roues directrices (48) pouvant y être couplé, de préférence de façon rigide, qui porte le dispositif de séchage (9) et le dispositif de pressage (15) avec son entraînement (50).
